(19) Europäisches Patentamt
European Patent Office
Office européen des brevets

(11) **EP 4 403 586 A1**

(12) **EUROPEAN PATENT APPLICATION**

(43) Date of publication:
**24.07.2024 Bulletin 2024/30**

(21) Application number: **24152416.4**

(22) Date of filing: **17.01.2024**

(51) International Patent Classification (IPC):
**C08G 18/02** (2006.01)   **C08G 18/08** (2006.01)
**C08G 18/09** (2006.01)   **C08G 18/12** (2006.01)
**C08G 18/16** (2006.01)   **C08G 18/18** (2006.01)
**C08G 18/22** (2006.01)   **C08G 18/28** (2006.01)
**C08G 18/48** (2006.01)   **C08G 18/62** (2006.01)
**C08G 18/79** (2006.01)   **C09D 175/04** (2006.01)
**C09J 175/04** (2006.01)

(52) Cooperative Patent Classification (CPC):
(C-Sets available)
**C08G 18/12; C08G 18/022; C08G 18/0866;
C08G 18/092; C08G 18/165; C08G 18/168;
C08G 18/18; C08G 18/1875; C08G 18/222;
C08G 18/283; C08G 18/4833; C08G 18/6254;
C08G 18/79; C08G 18/792; C09D 175/04;**   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.01.2023   JP 2023008075
29.05.2023   JP 2023087957**

(71) Applicant: **Asahi Kasei Kabushiki Kaisha
Tokyo 1000006 (JP)**

(72) Inventors:
• **NATSUMI, Kiharu
Tokyo, 100-0006 (JP)**
• **SHINOMIYA, Kie
Tokyo, 100-0006 (JP)**
• **TAKEI, Akira
Tokyo, 100-0006 (JP)**

(74) Representative: **Strehl Schübel-Hopf & Partner
Maximilianstrasse 54
80538 München (DE)**

(54) **BLOCKED POLYISOCYANATE COMPOSITION, AQUEOUS BLOCKED POLYISOCYANATE COMPOSITION DISPERSION, AQUEOUS COATING MATERIAL COMPOSITION AND COATING FILM**

(57)   The present invention provides a blocked polyisocyanate composition, an aqueous blocked polyisocyanate composition dispersion, an aqueous coating material composition, and a coating film,
the blocked polyisocyanate composition including the following components (A), (B), (C), (D) and (E), and satisfying the following conditions (1) to (3):
component (A): a polyisocyanate derived from an aliphatic diisocyanate;
component (B): a nonionic hydrophilic compound containing an active hydrogen group;
component (C): a difunctional or higher polyether polyol;
component (D): a monool obtained by polymerizing an alkylene oxide having 3 or more carbon atoms; and
component (E): a pyrazole-based compound,
(1) a mass ratio of a structural unit derived from the component (A) with respect to a structural unit derived from the component (B) (((A)/(B)) ratio) is 60/40 or more and 90/10 or less;
(2) a content of a structural unit derived from the component (C) is 0.1% by mass or more and 10% by mass or less with respect to a total mass of the blocked polyisocyanate composition; and
(3) a content of the component (D) is 0.05% by mass or more and 6.5% by mass or less with respect to the total mass of the blocked polyisocyanate composition.

EP 4 403 586 A1

(52) Cooperative Patent Classification (CPC): (Cont.)
**C09J 175/04;** C08G 2170/40; C08G 2170/80

C-Sets
**C08G 18/12, C08G 18/285**

**Description**

BACKGROUND OF THE INVENTION

Field of the Invention

The present invention relates to a blocked polyisocyanate composition, an aqueous blocked polyisocyanate composition dispersion, an aqueous coating material composition, and a coating film.

Priority is claimed on Japanese Patent Application No. 2023-008075, filed on January 23, 2023,and Japanese Patent Application No. 2023-087957, filed on May 29, 2023,the content of which is incorporated herein by reference.

Description of the Related Art

Two-component polyurethane coating material compositions using polyisocyanate compositions derived from aliphatic diisocyanates as curing agents exhibit excellent performance in terms of chemical resistance, flexibility, weather resistance, and the like, and are therefore used in a wide range of fields such as coating materials, inks, pressure-sensitive adhesives, and adhesives. Furthermore, depending on the usage conditions, they have been used in a wide range of fields such as architecture, heavy-duty anticorrosion, automobiles, industrial use and its maintenance and repair, in the form of a two-component type cold setting composition or one-component type thermosetting composition.

In recent years, from the perspective of reducing the burden on the global environment, conversion of a polyisocyanate which is a curing agent obtained using a urethane coating material composition conventionally used as a solvent-based coating material into a water-based material (aqueous material) has been desired.

However, urethane coating material compositions are difficult to disperse in water, and therefore polyisocyanate compositions having hydrophilic groups are being developed (see, for example, Patent Document 1, Patent Document 2, and the like).

Among these, the curing agent of a one-component type thermosetting coating material composition has the advantage of protecting isocyanate groups with a blocking agent and quickly producing a cured coating film by carrying out a thermal process as necessary and regenerating the isocyanate group and reacting with the hydroxyl group of the polyol, which is a main agent. From the viewpoint of environmental protection, there is a strong desire for an aqueous one-component type thermosetting coating material composition.

One method for converting a blocked polyisocyanate into an aqueous material is to add at least one ionic hydrophilic group selected from the group consisting of nonionic and cationic groups to the blocked polyisocyanate (see, for example, Patent Document 3, and the like).

Patent Document 3 discloses that a blocked polyisocyanate into which a cationic group has been introduced can be cured at a low temperature during mixing of coating materials.

Further, it has been disclosed that blocked polyisocyanates using nonionic hydrophilic groups exhibit favorable curability and water resistance of coating films (see Patent Document 4, Patent Document 5, and the like).

PRIOR ART DOCUMENTS

[Patent Documents]

[Patent Document 1] International Patent Publication No. 01/88006
[Patent Document 2] International Patent Publication No. 2016/104485
[Patent Document 3] Japanese Patent No. 5344875
[Patent Document 4] Japanese Unexamined Patent Application, First Publication No. 2011-231264
[Patent Document 5] Japanese Unexamined Patent Application, First Publication No. 2020-143231

SUMMARY OF THE INVENTION

Problems to be Solved by the Invention

However, the blocked polyisocyanate using a cationic hydrophilic group disclosed in Patent Document 3 exhibits insufficient water dispersibility and curability, and there is still room for improvement. In addition, the water resistance when formed into a coating film and the compatibility with aqueous main agents have not been verified.

Further, the blocked polyisocyanates described in Patent Document 4 and Patent Document 5 that use nonionic hydrophilic groups have room for improvement in compatibility with main agents and dispersibility in water, and have also not been verified in terms of adhesion to coated base materials and storage stability.

The present invention has an object of providing a blocked polyisocyanate composition which is easily dispersible in water, exhibits excellent compatibility with a polyol main agent, exhibits favorable storage stability as a curing agent alone, easily adheres to a coated base material, and exhibits favorable curability and water resistance when formed into a coating film; and an aqueous blocked polyisocyanate composition dispersion, an aqueous coating material composition, and a coating film using the same.

Means for Solving the Problem

That is, the present invention includes the following aspects.

[1] A blocked polyisocyanate composition containing the following components (A), (B), (C), (D) and (E), and satisfying the following conditions (1) to (3):

component (A): a polyisocyanate derived from an aliphatic diisocyanate;
component (B): a nonionic hydrophilic compound containing an active hydrogen group;
component (C): a difunctional or higher polyether polyol;
component (D): a monool polymerized with an alkylene oxide having 3 or more carbon atoms; and
a monool in which an alkylene oxide having 3 or more carbon atoms are polymerized,
component (E): a pyrazole-based compound,

(1) a mass ratio of a structural unit derived from the aforementioned component (A) with respect to a structural unit derived from the aforementioned component (B) (that is, an ((A)/(B)) ratio) is 60/40 or more and 90/10 or less;
(2) a content of a structural unit derived from the aforementioned component (C) is 0.1% by mass or more and 10% by mass or less with respect to a total mass of the aforementioned blocked polyisocyanate composition; and
(3) a content of the aforementioned component (D) is 0.05% by mass or more and 6.5% by mass or less with respect to the total mass of the aforementioned blocked polyisocyanate composition.

[2] The blocked polyisocyanate composition according to [1], wherein the aforementioned component (B) has 5 or more and 20 or less alkylene oxide repeating units.
[3] The blocked polyisocyanate composition according to [1] or [2], wherein the aforementioned component (C) has a number average molecular weight of 300 or more and 3,000 or less.
[4] The blocked polyisocyanate composition according to any one of [1] to [3], wherein the aforementioned component (D) has a number average molecular weight of 300 or more and 2,000 or less.
[5] The blocked polyisocyanate composition according to any one of [1] to [4], wherein a content of the aforementioned component (D) is less than 1% by mass with respect to a total mass of the aforementioned blocked polyisocyanate composition.
[6] An aqueous blocked polyisocyanate composition dispersion containing the blocked polyisocyanate composition according to any one of [1] to [5] and ion-exchanged water, wherein a proportion of the aforementioned ion-exchanged water with respect to the aforementioned aqueous blocked polyisocyanate composition dispersion as a whole is 50% by mass or more and 90% by mass or less.
[7] An aqueous coating material composition containing the blocked polyisocyanate composition according to any one of [1] to [5].
[8] A coating film obtained by curing the aqueous coating material composition according to [7].

Effects of the Invention

According to the present invention, it is possible to provide a blocked polyisocyanate composition which is easily dispersible in water, exhibits excellent compatibility with a polyol main agent, exhibits favorable storage stability as a curing agent alone, easily adheres to a coated base material, and exhibits favorable curability and water resistance when formed into a coating film; and an aqueous blocked polyisocyanate composition dispersion, an aqueous coating material composition, and a coating film using the same.

DETAILED DESCRIPTION OF THE INVENTION

Hereinafter, embodiments for carrying out the present invention (hereinafter, referred to as "the present embodiment") will be described in detail. It should be noted that the present invention is not limited to the present embodiment described below. The present invention can be appropriately modified and implemented within the scope and spirit of the invention.

It should be noted that in the present specification, the term "polyol" means a compound having two or more hydroxyl groups (-OH).

In the present specification, the term "polyisocyanate" means a reaction product in which a plurality of monomer compounds (monomers) having one or more isocyanate groups (-NCO) are bonded.

<Blocked polyisocyanate composition>

A blocked polyisocyanate composition of the present embodiment includes the following components (A), (B), (C), (D), and (E).

Component (A): a polyisocyanate derived from an aliphatic diisocyanate;
Component (B): a nonionic hydrophilic compound containing an active hydrogen group;
Component (C): a difunctional or higher polyether polyol;
Component (D): a monool obtained by polymerizing an alkylene oxide having 3 or more carbon atoms; and
Component (E): a pyrazole-based compound.

Hereinafter, the term "blocked polyisocyanate composition" may be abbreviated as a "BPI composition" in some cases.

When a numerical range is described as, for example, "from 1 to 10% by mass", it means a numerical range from 1% by mass to 10% by mass while including 1% by mass as the lower limit value and 10% by mass as the upper limit value.

Further, the BPI composition of the present embodiment satisfies the following conditions (1) to (3).

(1) A mass ratio of a structural unit derived from the component (A) with respect to a structural unit derived from the component (B) (that is, an ((A)/(B)) ratio) is from 60/40 to 90/10.
(2) A content of a structural unit derived from the component (C) is from 0.1 to 10% by mass with respect to the total mass of the BPI composition.
(3) A content of the component (D) is from 0.05 to 6.5% by mass with respect to the total mass of the BPI composition.

With regard to the condition (1), the (A)/(B) ratio is 60/40 or more, preferably 63/37 or more, and more preferably 65/35 or more. On the other hand, the (A)/(B) ratio is 90/10 or less, preferably 85/15 or less, and more preferably 80/20 or less.

The above upper limit value and lower limit value can be arbitrarily combined.

Examples of combinations are from 60/40 to 90/10, from 63/37 to 85/15, and from 65/35 to 80/20.

When the (A)/(B) ratio is within the above range, a BPI composition which is easily dispersible in water, exhibits excellent compatibility with a main agent, and exhibits favorable curability and water resistance when formed into a coating film can be provided.

The (A)/(B) ratio can be calculated by $^1$H-NMR measurement.

As a specific measurement method, first, a $CDCl_3$ solution (deuterated chloroform) of the BPI composition is prepared.

Subsequently, the obtained solution is subjected to $^1$H-NMR measurement under the following measurement conditions to confirm methylene groups derived from the component (A), methylene groups derived from the component (B), and methyl groups derived from the component (B).

With regard to the characteristic peak (chemical shift value) of each composition, the methylene group derived from the component (A) has a peak around 1.4 ppm, the methylene group derived from the component (B) has a peak around 3.5 ppm, and the methyl group derived from the component (B) has a peak around 3.4 ppm.

When the $^1$H-NMR integration value of the methylene group derived from the component (A) is defined as x, the $^1$H-NMR integration value of the methylene group derived from the component (B) is defined as y, and the $^1$H-NMR integration value of the methyl group derived from the component (B) is defined as z, the (A)/(B) ratio can be calculated using the following formula.

$$(A)/(B) = [(x \times 168)/4]/ [(y \times 44)/4 + (z \times 76)/3]$$

With regard to the condition (2), the content of the structural unit derived from the component (C) is from 0.1 to 10% by mass, preferably from 0.5 to 5% by mass, and more preferably from 1 to 3% by mass, with respect to the total mass of the BPI composition.

When the content of the structural unit derived from the component (C) is within the above range, the curability when formed into a coating film tends to be favorable.

The content of the structural unit derived from the component (C) can be measured using a method described in Examples described later.

With regard to the condition (3), the content of the component (D) is preferably less than 1% by mass, preferably 0.99% by mass or less, more preferably 0.95% by mass or less, still more preferably 0.9% by mass or less, and particularly preferably 0.88% by mass or less with respect to the total mass of the BPI composition.

With regard to the condition (3), the content of the component (D) is, for example, 0.05% by mass or more, 0.10% by mass or more, 0.15% by mass or more, 0.2% by mass or more, and 0.25% by mass or more with respect to the total mass of the BPI composition.

The above upper limit value and lower limit value can be arbitrarily combined.

As examples of combinations, the content of the component (D) is 0.05% by mass or more and less than 1% by mass, from 0.10 to 0.99% by mass, from 0.15 to 0.95% by mass, from 0.2 to 0.9% by mass, or from 0.25 to 0.88% by mass with respect to the total mass of the BPI composition.

When the content of the component (D) is within the above range, the compatibility with the main agent tends to be favorable.

The content of the component (D) can be measured using a method described in Examples described later.

The constituent components of the BPI composition of the present embodiment will be explained in detail below.

<<Component (A)>>

The component (A) is a polyisocyanate derived from an aliphatic diisocyanate.

Examples of the aliphatic diisocyanate include, but are not limited to, 1,4-diisocyanatobutane, 1,5-diisocyanatopentane, ethyl (2,6-diisocyanato) hexanoate, HDI, 1,9-diisocyanatononane, 1,12-diisocyanatododecane, and 2,2,4- or 2,4,4-trimethyl-1,6-diisocyanatohexane.

Any one of these aliphatic diisocyanates may be used alone, or two or more types thereof may be used in combination. Among these, HDI is preferred from the viewpoints of weather resistance and industrial availability. Any one of these aliphatic diisocyanates may be used alone, or two or more types thereof may be used in combination.

Examples of the polyisocyanate derived from the above aliphatic diisocyanate include, but are not limited to, a polyisocyanate having a uretdione structure obtained by cyclodimerization of two isocyanate groups, a polyisocyanate having an isocyanurate structure obtained by cyclotrimerization of three isocyanate groups, a polyisocyanate having an iminooxadiazinedione structure obtained by cyclotrimerization of three isocyanate groups, a polyisocyanate having a biuret structure obtained by reacting three isocyanate groups with one water molecule, a polyisocyanate having an oxadiazinetrione structure obtained by reacting two isocyanate groups with one molecule of carbon dioxide, a polyisocyanate having a urethane group obtained by reacting one isocyanate group with one hydroxyl group, a polyisocyanate having an allophanate structure obtained by reacting two isocyanate groups with one hydroxyl group, a polyisocyanate having an acylurea group obtained by reacting one isocyanate group with one carboxy group, and a polyisocyanate having a urea structure obtained by reacting one isocyanate group with one primary or secondary amine. Any one of these polyisocyanates may be used alone, or two or more types thereof may be used in combination.

It should be noted that the term "polyisocyanate" as used herein includes not only polyisocyanates derived only from the above aliphatic diisocyanates, but also polyisocyanates obtained by reacting the above aliphatic diisocyanates with compounds other than diisocyanates (for example, alcohols such as monoalcohols, water, and amines).

Further, as an isocyanate component other than the component (A), a polyisocyanate derived from an aliphatic diisocyanate or an aliphatic triisocyanate may be included.

Examples of the alicyclic diisocyanate include 1,3- or 1,4-bis(isocyanatomethyl)cyclohexane (hereinafter, sometimes abbreviated as "hydrogenated XDI"), 1,3- or 1,4-diisocyanatocyclohexane, 3,5,5-trimethyl 1-isocyanato-3-(isocyanatomethyl) cyclohexane (hereinafter sometimes abbreviated as "IPDI"), 4-4'-diisocyanato-dicyclohexylmethane (hereinafter, sometimes abbreviated as "hydrogenated MDI"), and 2,5- or 2,6-diisocyanatomethylnorbornane. Any one of these aliphatic diisocyanates may be used alone, or two or more types thereof may be used in combination.

Examples of the aliphatic triisocyanate include 1,3,6-triisocyanatohexane, 1,8-diisocyanato-4-isocyanatomethyloctane, and 2-isocyanatoethyl-2,6-diisocyanato-hexanoate. Any one of these aliphatic triisocyanates may be used alone, or two or more types thereof may be used in combination.

<<Component (B)>>

The component (B) is a nonionic hydrophilic compound containing an active hydrogen group. Examples of the component (B) include a poly(oxyalkylene) monoalkyl ether and the like. Among them, from the viewpoint of lowering the viscosity of the blocked polyisocyanate composition, as the poly(oxyalkylene) monoalkyl ether, a compound represented by the following general formula (I) (hereinafter sometimes referred to as a "compound (I)") is preferred.

$$HO\text{-}(R^{11}O)_{n11}\text{-}R^{12} \qquad (I)$$

In the above general formula (I), $R^{11}$ is an alkylene group having 1 to 4 carbon atoms, and $R^{12}$ is an alkyl group having 1 to 4 carbon atoms.

Further, the polyalkylene glycol alkyl ether is not a single component, but an aggregate of substances with different numbers of n11 (hereinafter sometimes referred to as "degree of polymerization n11" or simply as "n11") indicating the degree of polymerization of alkylene oxide. Therefore, in the general formula (I), the degree of polymerization n11 of alkylene oxide is represented by its average number (average value). The average number of n11 is preferably from 5 to 20.

**[0053]** - $R^{11}$: In the general formula (I), $R^{11}$ is an alkylene group having 1 to 4 carbon atoms, and is preferably an alkylene group having 2 carbon atoms, that is, an ethylene group, from the viewpoint of imparting hydrophilicity.

**[0054]** - $R^{12}$: In the general formula (I), $R^{12}$ is an alkyl group having 1 to 4 carbon atoms, and is preferably an alkyl group having 1 carbon atom, that is, a methyl group, from the viewpoint of imparting hydrophilicity.

- n11

From the viewpoints of water dispersibility, water dispersion stability, and coating film appearance, the average number of n11 is preferably 5.0 or more, more preferably 5.2 or more, still more preferably 5.4 or more, and particularly preferably 6.0 or more.

On the other hand, from the viewpoint of coating film hardness, the average number of n11 is preferably 30 or less, more preferably 26 or less, still more preferably 23 or less, particularly preferably 20 or less, and most preferably 18 or less.

The component (B) preferably has 5 to 30 alkylene oxide repeating units. In other words, the average number of n11 is preferably from 5.0 to 30, more preferably from 5.2 to 26, still more preferably from 5.4 to 23, still more preferably from 6.0 to 20, and particularly preferably from 6.0 to 18. When the average number of n11 is equal to or more than the above lower limit value, since the emulsifying capacity is further increased, the dispersibility is further improved and dispersion can be achieved more easily. Therefore, the dispersibility in the main agent is further improved, and the appearance of the coating film tends to be further improved. On the other hand, when the average number of n11 is equal to or less than the above upper limit value, an excessive viscosity increase resulting in gelation or the like can be further prevented and dispersion tends to be achieved more easily. Furthermore, the hardness of the coating film tends to be further improved.

Examples of commercially available products of poly(oxyalkylene) alkyl ethers include "UNIOX M400", "UNIOX M550", "UNIOX M1000", and "UNIOX M2000" (names of products manufactured by NOF Corporation), and "MPG-081", "MPG-130", and "TN-555" (names of products manufactured by Nippon Nyukazai Co., Ltd.).

The amount of poly(oxyalkylene) monoalkyl ether introduced into the component (B) can be calculated, for example, by using the following method.

More specifically, using the BPI composition of the present embodiment as a sample, the introduced amount can be determined from the peak area ratio, at 220 nm in liquid chromatography (LC), of an unintroduced polyisocyanate, a polyisocyanate into which one monofunctional polyalkylene oxide polyether alcohol has been introduced, a polyisocyanate into which two monofunctional polyalkylene oxide polyether alcohols have been introduced, and a polyisocyanate into which three or more monofunctional polyalkylene oxide polyether alcohols have been introduced. Examples of measurement conditions by LC include the following conditions.

(Measurement conditions)

LC apparatus: UPLC (product name), manufactured by Waters Corporation
Column: ACQUITYUPLC HSS T3 1.8 $\mu$m C18 2.1 mm (inner diameter) $\times$ 50 mm (length), manufactured by Waters Corporation
Flow rate: 0.3 mL/min

Mobile phase: A= 10 mM aqueous ammonium acetate solution, B = acetonitrile
Gradient conditions: the initial mobile phase composition was A/B = 98/2, the ratio of B was linearly increased after sample injection, and A/B = 0/100 was reached after 10 minutes.
Detection method: photodiode array detector, measurement wavelength: 220 nm

The BPI composition exhibits favorable water dispersibility because a hydrophilic group (polyalkylene oxide unit) derived from a poly(oxyalkylene) monoalkyl ether is introduced into the component (B).

It should be noted that in the present specification, the term "water dispersibility" means a property that the BPI composition can be dispersed in water so as to become an O/W type. The water dispersibility can be evaluated, for example, by adding the BPI composition to water and mechanically stirring the resulting mixture using a bar, hand mixer, or the like, thereby checking whether it is dispersible in water, as shown in Examples described later. It should be noted that the term "O/W type" as used herein means an oil-in-water emulsion with water serving as a continuous phase.

<<Component (C)>>

The component (C) is a difunctional or higher polyether polyol. Although the difunctional or higher polyether polyol is not particularly limited, examples thereof include difunctional polyether polyols obtained by at least one type of addition polymerization selected from the group consisting of random addition and block addition of an alkylene oxide alone or a mixture thereof with a divalent hydroxy compound or a mixture thereof using a catalyst; difunctional polyether polyols obtained by reacting an alkylene oxide with a diamine compound; and the so-called difunctional polymer polyols obtained by polymerization of acrylamide and the like using these difunctional polyether polyols as media.

Examples of the above catalyst include alkali metal hydroxides, strongly basic catalysts, and composite metal cyanide complexes. Examples of the alkali metal include lithium, sodium and potassium. Examples of the strongly basic catalyst include alcoholates and alkylamines. Examples of the composite metal cyanide complex include metalloporphyrins and zinc hexacyanocobaltate complexes.

Examples of the alkylene oxide include ethylene oxide, propylene oxide, butylene oxide, cyclohexene oxide, and styrene oxide. Examples of the diamine compound include ethylenediamines and the like.

The number average molecular weight of the component (C) is preferably from 300 to 3,000, more preferably from 350 to 2,500, and still more preferably from 400 to 2,000. When the number average molecular weight of the component (C) is within the above range, flexibility and workability tend to be further improved. The number average molecular weight can be measured by a method described in Examples described later.

<<Component (D)>>

The component (D) is a monool obtained by polymerizing an alkylene oxide having 3 or more carbon atoms. The component (D) is derived from a starting monoalcohol and an alkylene oxide having 3 or more carbon atoms. The starting monoalcohol has 1 to 10 carbon atoms, preferably 2 to 8 carbon atoms, and more preferably 4 to 8 carbon atoms. Specific examples of these monoalcohols include alcohols such as methanol, ethanol, 2-propanol, n-butanol, sec-butanol, and 2-ethyl-1-hexanol.

Examples of the alkylene oxide having 3 or more carbon atoms include propylene oxide, butylene oxide, cyclohexene oxide, and styrene oxide, and propylene oxide is preferred.

The component (D) is obtained by addition of these alkylene oxides alone or in combination to the above-mentioned starting monoalcohol using, for example, hydroxides of lithium, sodium, potassium and the like, strongly basic catalysts such as alcoholates and alkylamines, composite metal cyanide complexes such as metalloporphyrins and zinc hexacyanocobaltate complexes, and the like.

The number average molecular weight of the component (D) is preferably from 300 to 2,000, more preferably from 300 to 1,500, and still more preferably from 350 to 1,000.

When the number average molecular weight of the component (D) is less than 300, the compatibility with the polyol of the BPI composition obtained using the component (D) may deteriorate, and when the number average molecular weight of the component (D) exceeds 2,000, the hardness of the coating film may deteriorate.

An aqueous blocked polyisocyanate having highly polar bonds to which the component (D) is added exhibits excellent compatibility with a polyol. The bond of the aqueous blocked polyisocyanate formed by the hydrophilic group and isocyanate group with the blocking agent suppresses the compatibility with the polyol.

The component (D) has a high molecular weight, and in addition, oxygen is present in the repeating unit of the molecular chain. This is considered to cause the component (D) to approach a portion of the aqueous blocked polyisocyanate with less compatibility and improve the compatibility with the polyol as a whole.

Examples of commercially available products of monools in which an alkylene oxide having 3 or more carbon atoms is polymerized include "Leocon 1015H" (product name) manufactured by Lion Specialty Chemicals Co., Ltd.,

"Preminol SX1050" and "Preminol SX1060" (product names) manufactured by AGC Inc., and "Blaunon P-101M" and "Blaunon P-171" (product names) manufactured by Aoki Oil Industrial Co., Ltd.

<<Component (E)>>

The component (E) is a pyrazole-based compound.

In the BPI composition, at least a portion of the isocyanate groups of the component (A) are sealed by the component (E).

Examples of the pyrazole-based compound include pyrazole, 3-methylpyrazole, and 3,5-dimethylpyrazole. Any one of these pyrazole-based compounds may be used alone, or two or more types thereof may be used in combination. Among these, 3,5-dimethylpyrazole is preferred as the component (E) because the curability tends to be further improved during low temperature or short time drying.

<<Component (F)>>

The BPI composition may contain a component (F) as an optional component. The component (F) is an antifungal agent, and isothiazoline-based compounds and imidazole-based compounds can be used.

Commercially available products are usually used as the isothiazoline-based compound, and specific examples of the commercially available products include "Biocut TR120" (product name) manufactured by Nippon Soda Co., Ltd., "PROXEL GXL" and "PROXEL BDN" (product names) manufactured by Arch Chemicals, Inc., and Dow Chemical Company "KLARIX 4000", "ROZONE 2000", "ROCIMA252", "ROCIMA200", "ROCIMA345", "ROCIMA350", "ROCIMA553", "BIOBAN 551S", and "SKANE M-8" (product names) manufactured by the Dow Chemical Company.

The imidazole-based compounds have particularly excellent antifungal properties. Commercially available products are usually used as the imidazole-based compound, and specific examples of the commercially available products include "Biocut N35", "Biocut AF40", and "DX-2" (product names) manufactured by Nippon Soda Co., Ltd., and "ROCIMA 363" (product name) manufactured by the Dow Chemical Company.

When the BPI composition contains the component (F), the content of the component (F) is, for example, from 0.01 to 10.0 parts by mass in the total amount of the BPI composition.

<Method for producing BPI composition>

Although the method is not particularly limited, the BPI composition can be obtained by reacting the component (A), the component (B), the component (C), the component (D), the component (E), and the optional component (F).

The reaction of the isocyanate group of the component (A) with the component (B), the component (C), and the component (D), and the reaction of the isocyanate group of the component (A) with the component (D) can also be carried out simultaneously, and it is also possible to carry out either one of the reactions in advance and then carry out the second reaction.

Among these, it is preferable to first carry out the reaction between the components (A), (B), (C), and (D), and after completion of the reaction, carry out the reaction with the component (E).

Further, an aliphatic diisocyanate may be used in the reaction as the component (A), or a polyisocyanate derived from an aliphatic diisocyanate in advance may be used in the reaction.

In the reaction step, an organic metal salt, a tertiary amine-based compound or an alkali metal alcoholate may be used as a catalyst. Examples of the metal contained in the organic metal salt include tin, zinc, and lead. Examples of the alkali metal include sodium and the like.

The reaction temperature in the reaction step is preferably from -20 to 150°C, and more preferably from 30 to 100°C. When the reaction temperature is equal to or higher than the above lower limit value, the reactivity tends to be higher. On the other hand, when the reaction temperature is equal to or lower than the above upper limit value, side reactions tend to be suppressed more effectively.

[Effective isocyanate group (NCO) content]

In the BPI composition of the present embodiment, the effective NCO content is not particularly limited, but is preferably from 1 to 15% by mass, more preferably from 1.5 to 10% by mass, and still more preferably from 2 to 8% by mass since the storage stability of the BPI composition is further improved.

It should be noted that the effective NCO content can be calculated by using a method described in Examples described later.

The BPI composition can be used as a curing agent for coating material compositions (especially, aqueous two-component polyurethane coating material compositions).

In addition, the BPI composition is used for, for example, curable compositions such as pressure-sensitive adhesive compositions, adhesive compositions, and casting material compositions; various surface treatment agent compositions such as fiber treatment agents; various elastomer compositions; crosslinking agents such as foam compositions; modifiers; additives, and the like.

The pressure-sensitive adhesive compositions and adhesive compositions containing the BPI composition are used in, but are not particularly limited to, for example, automobiles, building materials, household electrical appliances, woodwork products, solar cell laminates, and the like. Among them, optical members for liquid crystal displays of household electrical appliances such as televisions, personal computers, digital cameras, and mobile phones require lamination of films and plates of various adherends in order to exhibit various functions. Therefore, since sufficient tackiness or adhesiveness is required between films and plates of various adherends, the pressure-sensitive adhesive compositions and adhesive compositions containing the BPI composition are suitably used for adhesion of optical members for liquid crystal displays of household electrical appliances, and the like.

<Aqueous blocked polyisocyanate composition dispersion>

The BPI composition can be formed as an aqueous dispersion dispersed in ion-exchanged water. The content of ion-exchanged water is preferably from 50 to 90% by mass, more preferably from 45 to 80% by mass, and still more preferably from 40 to 75% by mass with respect to the entire aqueous dispersion. When the content is less than 50% by mass, the viscosity of the isocyanate composition may be too high, resulting in poor workability. When the content exceeds 90% by mass, the effective NCO% and viscosity of the isocyanate composition will decrease, and it may become difficult to adjust the mixing with the polyol as a main agent.

<Aqueous coating material composition>

The aqueous coating material composition of the present embodiment includes the BPI composition and one or more main agents. By having the above constitution, the aqueous coating material composition of the present embodiment exhibits excellent compatibility with the BPI composition as a curing agent and the main agent, and a coating film with favorable curability, adhesion, and water resistance can be obtained.

<<Main agent>>

As the main agent used in the aqueous coating material composition, an aqueous polyol is preferred. The term "aqueous polyol" includes all those expressed as latexes, emulsions, dispersions, and water-soluble resins containing hydroxyl groups. Specific examples of the aqueous polyol include polyvinylidene chloride copolymers, polyvinyl chloride copolymers, vinyl acetate copolymers, water-soluble acrylic resins, water-soluble polyester resins, urethane dispersions, acrylic emulsions, fluorine-containing copolymer emulsions, styrene-butadiene copolymer latexes, acrylonitrile-butadiene copolymers, rubber-based latexes, polybutadiene copolymers, urethane acrylic emulsions, and copolymers or mixtures thereof.

Among these, as the aqueous polyol, those expressed as latexes, emulsions, or dispersions are preferred because they exhibit excellent operability and water resistance. Further, among these, acrylic emulsions, fluorine-containing copolymer emulsions, urethane dispersions, or polymers thereof are particularly preferred because they are particularly excellent in weather resistance, gloss, and toughness when formed into a coating film.

When using an aqueous polyol expressed as a latex, emulsion, or dispersion, the lower limit value of the particle size thereof is preferably 5 nm, more preferably 10 nm, and still more preferably 40 nm. On the other hand, the upper limit value of the particle diameter is preferably 1.0 $\mu$m, more preferably 500 nm, and still more preferably 300 nm.

That is, the particle diameter is preferably from 5 nm to 1.0 $\mu$m, more preferably from 10 to 500 nm, and still more preferably from 40 to 300 nm.

When the particle size is within the above range, the gloss when formed into a coating film is higher and the water resistance is also further improved. Further, the stability as a latex, emulsion or dispersion is also more sufficient.

The lower limit value of the hydroxyl value of the aqueous polyol is preferably 1 mgKOH/g, more preferably 5 mgKOH/g, and still more preferably 10 mgKOH/g. On the other hand, the upper limit value of the hydroxyl value is preferably 300 mgKOH/g, more preferably 200 mgKOH/g, and still more preferably 150 mgKOH/g.

In other words, the hydroxyl value of the aqueous polyol is preferably from 1 to 300 mgKOH/g, more preferably from 5 to 200 mgKOH/g, and still more preferably from 10 to 150 mgKOH/g.

When the hydroxyl value of the aqueous polyol is within the above range, the number of crosslinking points becomes more sufficient, and a more flexible and tough coating film can be obtained.

In the aqueous coating material composition of the present embodiment, the lower limit value of the molar ratio of the isocyanate groups of the BPI composition with respect to the hydroxyl groups of the aqueous polyol ((isocyanate group)/ (hydroxyl group)) is preferably 0.3, more preferably 0.5, and still more preferably 0.6. On the other hand, the upper limit value of the above molar ratio is preferably 5.0, more preferably 3.0, and still more preferably 2.5.

In other words, the molar ratio of the isocyanate groups of the above polyisocyanate composition with respect to the hydroxyl groups of the aqueous polyol ((isocyanate group)/ (hydroxyl group)) is preferably from 0.3 to 5.0, more preferably from 0.5 to 3.0, and still more preferably from 0.6 to 2.5.

When the molar ratio ((isocyanate group)/ (hydroxyl group)) is within the above range, the number of crosslinking points becomes more sufficient, and a more flexible and tough coating film can be obtained.

In addition to the BPI composition and the above main agent, the aqueous coating material composition of the present embodiment can contain various known and commonly used additives for coating materials depending on the intended use and method of use. Examples of the additives for coating materials include thickeners, leveling agents, thixotropic agents, antifoaming agents, freeze stabilizers, matting agents, crosslinking reaction catalysts, antiskinning agents, dispersing agents, wetting agents, light stabilizers, antioxidants, ultraviolet absorbers, fillers, plasticizers, lubricants, reducing agents, preservatives, antifungal agents, deodorants, antiyellowing agents, and antistatic agents or electrostatic charge control agents. These additives can be appropriately selected and used within a range that does not interfere with the effects of the aqueous coating material composition of the present embodiment.

<Method for producing aqueous coating material composition>

The aqueous coating material composition of the present embodiment is prepared, for example, by first adding the above-mentioned additive for coating materials to an aqueous dispersion of the main agent or an aqueous solution thereof, if necessary. Subsequently, the BPI composition is added as a curing agent, and if necessary, water and a solvent are further added thereto. Then, an aqueous coating material composition can be obtained by forcibly stirring using a stirrer.

<Intended use>

The aqueous coating material composition of the present embodiment is suitably used, for example, as a coating material for a primer coat, intermediate coat, or top coat, in order to be coated onto an object to be coated which is formed by molding various materials using coating methods such as, but not limited to, roll coating, curtain flow coating, spray coating, electrostatic coating, and bell coating. In addition, it is also useful as a coating material for imparting decorativeness, weather resistance, acid resistance, rust prevention properties, chipping resistance, and the like to coating or the like of precoated metals including rust-proof steel plates, automobiles, and plastics. Further, it is also useful as a urethane raw material for adhesives, fiber treatments, synthetic leather treatments, elastomers, foams, surface treatment agents, and the like.

Examples of raw materials for the object to be coated with the aqueous coating material composition include glass; various metals such as aluminum, iron, galvanized steel sheets, copper, and stainless steel; porous materials such as wood, paper, mortar, and stone materials; components coated with fluorine coating, urethane coating, acrylic urethane coating, or the like; cured sealants such as silicone-based cured products, modified silicone-based cured products, and urethane-based cured products; rubbers such as vinyl chloride, natural rubber, and synthetic rubber; leathers such as natural leather and artificial leather; fibers such as plant fibers, animal fibers, carbon fibers, and glass fibers; films and plates of nonwoven fabrics and resins such as polyester resins, acrylic resins, polycarbonate resins, triacetylcellulose resins, and polyolefin resins; ultraviolet-curable acrylic resin layers; and layers formed from inks such as printing ink and UV ink.

<Coating film>

The coating film of the present embodiment is a coating film obtained by curing the aqueous coating material composition described above. The coating film of the present embodiment exhibits favorable curability and water resistance.

The coating film of the present embodiment is obtained by coating the aqueous coating material composition described above onto an adherend, followed by drying. Examples of the coating method include the same methods as those described above in the intended use of the aqueous coating material composition. In addition, examples of the adherend include the same objects to be coated as those described above in the intended use of the aqueous coating material composition.

EXAMPLES

Hereinafter, the present embodiment will be described in more detail with reference to specific Examples and Comparative Examples, but the present embodiment is in no way limited by the following Examples and Comparative Examples as long as it does not exceed the scope thereof. Various physical properties and evaluations in Examples and Comparative Examples were measured and evaluated as follows.

<Method for measuring physical properties>

[Physical property 1]

As a physical property 1, the isocyanate group (NCO) content (% by mass) of polyisocyanate was measured.
1 to 3 g of the polyisocyanate was accurately weighed into an Erlenmeyer flask (W g). Then, 20 mL of toluene was added to the Erlenmeyer flask to dissolve the polyisocyanate. Subsequently, 10 mL of a 2N toluene solution of di-n-butylamine was added thereto, and after mixing, the resulting mixture was allowed to stand at room temperature for 15 minutes. Then, 70 mL of isopropyl alcohol was added to the Erlenmeyer flask and mixed. This solution was titrated with a 1N hydrochloric acid solution (factor F) in the presence of an indicator. This titration value was taken as V2 mL.
Then, the same operation was performed without the polyisocyanate, and the titration value was taken as V1 mL.
Then, the NCO content of the polyisocyanate was calculated by the formula shown below.

$$\text{NCO content (\% by mass)} = (V1 - V2) \times F \times 42/(W \times 1{,}000) \times 100$$

[Physical property 2] Nonvolatile content

As a physical property 2, the nonvolatile content of the BPI composition was measured.
The nonvolatile content of the BPI composition was determined as follows. First, an aluminum dish having a bottom diameter of 38 mm was accurately weighed, and about 1 g of each blocked polyisocyanate component was then placed on the aluminum dish and accurately weighed (W1). Then, the blocked polyisocyanate component was adjusted to have a uniform thickness, and was then kept in an oven at 105°C for 1 hour. Subsequently, after the aluminum dish reached room temperature, the blocked polyisocyanate component remaining in the aluminum dish was accurately weighed (W2). Then, the nonvolatile content of the blocked polyisocyanate component was calculated by the formula shown below.

$$\text{Nonvolatile content (\% by mass)} = W2/W1 \times 100$$

[Physical property 3]

As a physical property 3, the effective isocyanate group (NCO) content of the BPI composition was measured.
The effective NCO content of the BPI composition was determined as follows. The term effective NCO content (% by mass) as used herein quantifies the amount of blocked isocyanate groups that are present in the blocked polyisocyanate component after the blocking reaction and can participate in the crosslinking reaction, and is expressed as the mass percentage (% by mass) of the isocyanate groups. The effective NCO content was calculated using the formula shown below.
It should be noted that in the formula shown below, "S" represents the nonvolatile content (% by mass) of the blocked polyisocyanate component. "W1" represents the mass (g) of the polyisocyanate used in the reaction. "A" represents the isocyanate group content (% by mass) of the polyisocyanate. "W2" represents the mass (g) of the blocked polyisocyanate after the blocking reaction.

$$\text{Effective NCO content (\% by mass)} = \{S \times (W1 \times A)\}/W2$$

[Physical property 4]

As a physical property 4, the mass ratio of the structural unit derived from the component (A) with respect to the structural unit derived from the component (B) (((A)/(B)) ratio) was measured.
The mass ratio of the structural unit derived from the component (A) with respect to the structural unit derived from the component (B) (((A)/(B)) ratio) was calculated by $^1$H-NMR measurement.
As a specific measurement method, first, a $CDCl_3$ solution of the BPI composition was prepared. Subsequently, the obtained solution was subjected to $^1$H-NMR measurement under the following measurement conditions to confirm methylene groups derived from the component (A) and methylene groups and methyl groups derived from the component (B).

With regard to the characteristic peak (chemical shift value) of each composition, the methylene group derived from the component (A) had a peak around 1.4 ppm, the methylene group derived from the component (B) had a peak around 3.5 ppm, and the methyl group derived from the component (B) had a peak around 3.4 ppm. When the $^1$H-NMR integration value of the methylene group derived from the component (A) was defined as x, the $^1$H-NMR integration value of the methylene group derived from the component (B) was defined as y, and the $^1$H-NMR integration value of the methyl group derived from the component (B) was defined as z, the (A)/(B) ratio was calculated using the following formula.

$$(A)/(B) = [(x \times 168)/4]/ [(y \times 44)/4 + (z \times 76)/3]$$

[Physical property 5]

As a physical property 5, the content of the structural unit derived from the component (C) was measured.

The content of the structural unit derived from the component (C) was calculated using the following formula from the contents of structural units derived from the components (A), (B), (C), and (D), and the amount of the component (E) added. It should be noted that in the formula shown below, (A) to (E) represent the amount (g) of each component added.

$$\text{Content (\% by mass) of structural unit derived from polyol (component (C))}$$

$$= [(C)/((A) + (B) + (C) + (D) + (E))] \times 100$$

[Physical property 6]

As a physical property 6, the content of the structural unit derived from the component (D) was measured.

The content of the structural unit derived from the component (D) was calculated using the following formula from the contents of structural units derived from the components (A), (B), (C), and (D), and the amount of the component (E) added. It should be noted that in the formula shown below, (A) to (E) represent the amount (g) of each component added.

$$\text{Content (\% by mass) of structural unit derived from monool (component (D))}$$

$$= [(D)/((A) + (B) + (C) + (D) + (E))] \times 100$$

[Production of aqueous one-component polyurethane coating material composition]

The aqueous acrylic resin dispersion (solid content: 42%, resin fraction hydroxyl value: 66 mgKOH/g, acid value: 16 mgKOH/g) obtained in Synthesis Example 6 (described later) was added to the BPI compositions obtained in Examples and Comparative Examples at a ratio such that the functional group ratio (NCO/OH) was 1.0. Furthermore, deionized water was added to this mixture at a ratio such that the solid content was 40%, and the resulting mixture was stirred at 1,000 rpm for 5 minutes using a disper blade to prepare an aqueous one-component polyurethane coating material composition.

[Evaluation 1] Water dispersibility

The water dispersibility of the BPI composition was determined by measuring the transmittance with a spectrophotometer (transmittance at a wavelength of 550 nm is indicated as "T550%"). An evaluation was made based on the following criteria using a measuring instrument "UV-160" (product name) manufactured by Shimadzu Corporation (cell length = 20 mm, distilled water was used as a reference).

(Evaluation criteria)

A: Transmittance (T550%) was 70% or more.
B: Transmittance (T550%) was 50% or more and less than 70%.
C: Transmittance (T550%) was 30% or more and less than 50%.
D: Transmittance (T550%) was less than 30%.

[Evaluation 2] Compatibility with main agent

Each aqueous one-component polyurethane coating material composition was applied onto a glass plate with an applicator so as to have a thickness of 50 μm and baked at 130°C for 30 minutes to obtain a cured coating film. The transparency of the produced coating film was determined by measuring the haze value using a haze meter (HMG-2DP) manufactured by Suga Test Instruments Co., Ltd. An evaluation was made based on the following criteria.

(Evaluation criteria)

A: Haze value was less than 1.0%.
B: Haze value was 1.0% or more and less than 3.0%.
C: Haze value was 3.0% or more and less than 5.0%.
D: Haze value was 5.0% or more.

[Evaluation 3] Curability of coating film

Each aqueous one-component polyurethane coating material composition was applied onto a polypropylene plate with an applicator so that the resin film thickness was 50 μm and baked at 130°C for 30 minutes to obtain a cured coating film. Subsequently, the produced coating film was immersed in acetone at 23°C for 24 hours, and the mass of the undissolved portion was then divided by the mass before immersion to calculate the proportion (% by mass) of the undissolved portion. The curability of the coating film was evaluated in accordance with the following evaluation criteria.

(Evaluation criteria)

A: 90% by mass or more.
B: 80% by mass or more and less than 90% by mass.
C: 70% by mass or more and less than 80% by mass.
D: Less than 70% by mass.

[Evaluation 4] Water resistance of coating film

Each aqueous one-component polyurethane coating material composition was applied onto a glass plate with an applicator so that the resin film thickness was 50 μm and baked at 130°C for 30 minutes to obtain a cured coating film. Subsequently, a rubber ring was placed on the produced coating film, and deionized water was dropped onto the central portion. After a treatment at 40°C for 24 hours, the water resistance of the coating film was evaluated in accordance with the following evaluation criteria, based on the state of blisters generated between the glass base material and the coating film.

(Evaluation criteria)

A: No change in appearance.
B: Slight cloudiness, with no swelling of blisters.
C: Cloudiness with swelling of blisters in the local area.
D: Cloudiness with swelling of blisters on the entire surface.

[Evaluation 5] Adhesion to base material

Each aqueous one-component polyurethane coating material composition was applied onto a mild steel plate with an applicator so that the resin film thickness was 50 μm, and after being allowed to stand at room temperature for 15 minutes, baked at 130°C for 30 minutes to obtain a cured coating film. An adhesion test was conducted in accordance with JIS K5600-5-6.

(Evaluation criteria)

A: 90 squares or more out of 100 squares remained on the base material.

B: 70 squares or more and less than 90 squares out of 100 squares remained on the base material.

C: 50 squares or more and less than 70 squares out of 100 squares remained on the base material.

D: Less than 50 squares out of 100 squares remained on the base material.

[Evaluation 6] Storage stability

Each aqueous blocked isocyanate composition was filled into a glass container and stored in a sealed state in an environment of 40°C for 4 weeks, and changes in appearance and viscosity over time were measured at 25°C, using an E-type viscometer manufactured by Toki Sangyo Co., Ltd. The measurement was carried out using an E-type viscometer (manufactured by Tokimec Inc.) by using a standard rotor (1°34' × R24) as a rotor. The number of revolutions was as follows.

100 r.p.m. (in the case of less than 128 mPa·s)
50 r.p.m. (in the case of 128 mPa·s or more and less than 256 mPa·s)
20 r.p.m. (in the case of 256 mPa·s or more and less than 640 mPa·s)
10 r.p.m. (in the case of 640 mPa·s or more and less than 1,280 mPa s)
5 r.p.m. (in the case of 1,280 mPa·s or more and less than 2,560 mPa s)

An evaluation was made in accordance with the following evaluation criteria.

(Evaluation criteria)

A: No change in appearance or viscosity.
B: No change in appearance, and changes in viscosity within 20% with respect to the viscosity before storage.
C: Slight cloudiness with some paint coat particles, and changes in viscosity within 50% with respect to the viscosity before storage.
D: Cloudiness with some paint coat particles, and changes in viscosity of 100% or more with respect to the viscosity before storage.

Hereinafter, the present invention will be specifically explained based on Examples, but the present invention is not limited to these Examples.
It should be noted that the terms "parts" and "%" in Examples and Comparative Examples are based on mass unless specifically stated otherwise.

<Used materials>

Various materials represented by the abbreviations shown in Synthesis Examples, Examples, and Tables 1 to 4 were prepared.

HDI: hexamethylene diisocyanate.
PG1: a polyethylene oxide polyol with one terminal hydroxyl group, resin fraction hydroxyl value: 81 mgKOH/g, number average molecular weight: 690.

PG2: a polyethylene oxide polyol with one terminal hydroxyl group, resin fraction hydroxyl value: 130 mgKOH/g, number average molecular weight: 430.

POL1: a difunctional polyether polyol, hydroxyl value: 280 mgKOH/g, viscosity: 70 mPa s, number average molecular weight: 400.

POL2: a difunctional polyether polyol, hydroxyl value: 112 mgKOH/g, viscosity: 145 mPa·s, number average molecular weight: 1,000.

POL3: a difunctional polyether polyol, hydroxyl value: 56 mgKOH/g, viscosity: 305 mPa·s, number average molecular weight: 2,000.

JP-508T: 2-ethylhexyl acid phosphate, manufactured by Johoku Chemical Co., Ltd.

PPL1: a polyoxypropylene 2-ethylhexyl ether, which was a monool obtained by polymerizing an alkylene oxide having 3 or more carbon atoms, hydroxyl value: 70 mgKOH/g, number average molecular weight: 800.

PPL2: a polyoxypropylene 2-ethylhexyl ether, which was a monool obtained by polymerizing an alkylene oxide having 3 or more carbon atoms, hydroxyl value: 94 mgKOH/g, number average molecular weight: 600.

PCL: a difunctional polyester polyol, number average molecular weight: 2,000, manufactured by DIC Corporation.

PCD: a polycarbonate diol, number average molecular weight: 2,000.

ROCIMA 553: a mixture of 2-methyl-4-isothiazolin-3-one and 2-n-octyl-4-isothiazolin-3-one, manufactured by the Dow Chemical Company.

LH-10: Borchers LH-10, dibutyltin dilaurate, manufactured by Borchers sas.

XK-614: K-KAT XK-614, a zinc-amine compound, manufactured by Kusumoto Chemicals, Ltd.

<Production of isocyanate component (A)>

[Synthesis Example 1] Production of polyisocyanate Pa-1

A nitrogen atmosphere was established in a four-necked flask equipped with a stirrer, a thermometer, a reflux condenser tube, a nitrogen blowing tube and a dropping funnel, 1,000 g of HDI and 1.8 parts of 2-ethylhexanol were charged thereinto, the temperature inside the reactor was maintained at 75°C while stirring, tetramethylammonium caprylate was added thereto, and when the yield reached 38%, phosphoric acid was added to stop the reaction. After filtering the reaction solution, unreacted HDI was removed using a thin film evaporator to obtain an isocyanurate-type polyisocyanate Pa-1. The NCO content of the obtained Pa-1 was 22.1% by mass.

[Synthesis Example 2] Production of polyisocyanate Pa-2

A nitrogen atmosphere was established in a four-necked flask equipped with a stirrer, a thermometer, a reflux condenser tube, a nitrogen blowing tube and a dropping funnel, 1,000 g of HDI and 32 g of 2-ethylhexanol were charged thereinto, the temperature inside the reactor was maintained at 80°C while stirring, tetramethylammonium caprylate as an isocyanurate-forming reaction catalyst was added thereto, and when the yield reached 28%, phosphoric acid was added to stop the reaction. After filtering the reaction solution, unreacted HDI was removed using a thin film evaporator to obtain a polyisocyanate Pa-2. The NCO content of the obtained Pa-2 was 20.7% by mass.

[Synthesis Example 3] Production of polyisocyanate Pa-3

A nitrogen atmosphere was established in a four-necked flask equipped with a stirrer, a thermometer, a reflux condenser tube, a nitrogen blowing tube and a dropping funnel, 1,000 g of HDI and 333.3 g of a mixed solution of methyl cellosolve and trimethyl phosphate (methyl cellosolve/trimethyl phosphate = 1/1) were charged thereinto, the temperature inside the reactor was maintained at 140°C while stirring, and 12.0 g of ion-exchanged water was added to start the reaction. When the yield reached 33%, the temperature was lowered to stop the reaction. After filtering the reaction solution, unreacted HDI was removed using a thin film evaporator to obtain a polyisocyanate Pa-3. The NCO content of the obtained Pa-3 was 22.4% by mass.

[Synthesis Example 4] Production of polyisocyanate Pa-4

A nitrogen atmosphere was established in a four-necked flask equipped with a stirrer, a thermometer, a reflux condenser tube, a nitrogen blowing tube and a dropping funnel, 1,000 g of HDI and 2 parts of 2-ethylhexanol were charged thereinto, the temperature inside the reactor was maintained at 80°C while stirring, tetramethylammonium caprylate as an isocyanurate-forming reaction catalyst was added thereto, and when the yield reached 17%, phosphoric acid was added to stop the reaction. After filtering the reaction solution, unreacted HDI was removed using a thin film evaporator to obtain a polyisocyanate Pa-4. The NCO content of the obtained Pa-4 was 23.5% by mass.

[Synthesis Example 5] Production of polyisocyanate Pa-5

A nitrogen atmosphere was established in a four-necked flask equipped with a stirrer, a thermometer, a reflux condenser tube, a nitrogen blowing tube and a dropping funnel, 1,000 g of HDI and 3 parts of 2-ethylhexanol were charged thereinto, the temperature inside the reactor was maintained at 80°C while stirring, tetramethylammonium caprylate as an isocyanurate-forming reaction catalyst was added thereto, and when the yield reached 14%, phosphoric acid was added to stop the reaction. After filtering the reaction solution, unreacted HDI was removed using a thin film evaporator to obtain a polyisocyanate Pa-5. The NCO content of the obtained Pa-5 was 23.0% by mass.

<Production of main agent>

[Synthesis Example 6] Production of aqueous acrylic resin dispersion

70 parts by mass of deionized water, 2 parts by mass of a 40% aqueous emulsifier solution, 0.37 parts by mass of methyl methacrylate, 0.23 parts by mass of n-butyl acrylate, 0.24 parts by mass of n-butyl methacrylate, 0.15 parts by mass of 2-hydroxyethyl methacrylate, and 0.01 parts by mass of acrylic acid were charged into a reaction vessel and mixed in a nitrogen stream, and a 3% aqueous ammonium persulfate solution was added at 60°C. Subsequently, the temperature was raised to 70°C, and a mixed solution composed of 29 parts by mass of methyl methacrylate, 18 parts by mass of n-butyl acrylate, 19 parts by mass of n-butyl methacrylate, 12 parts by mass of 2-hydroxyethyl methacrylate, 1 part by mass of acrylic acid, 2 parts by mass of a 40% aqueous emulsifier solution, 4 parts by mass of a 3% aqueous ammonium persulfate solution, and 40 parts by mass of deionized water was added to the reaction solution over 3 hours. Then, while maintaining the temperature at 70°C, a mixed solution composed of 7.63 parts by mass of methyl methacrylate, 3.77 parts by mass of n-butyl acrylate, 4.76 parts by mass of n-butyl methacrylate, 2.85 parts by mass of 2-hydroxyethyl methacrylate, 0.99 parts by mass of acrylic acid, and 4 parts by mass of a 3% aqueous ammonium persulfate solution was added to the reaction solution over 2 hours. After one hour of aging, 15 parts by mass of deionized water was added to the reaction solution, and the temperature was lowered to 30°C. The resulting mixture was neutralized with dimethylethanolamine to obtain an aqueous acrylic resin dispersion with a solid content of 42%. The resin fraction hydroxyl value of the aqueous acrylic resin dispersion was 66 mgKOH/g, the acid value was 16 mgKOH/g, the number average molecular weight was 150,000, the pH was 7.1, the average particle diameter was 0.1 $\mu$m, and the appearance was opaque white. It should be noted that the average particle diameter is a value measured using an average particle diameter measuring device (submicron particle size distribution measuring device, "Coulter N4 Plus (trademark)", manufactured by Beckman Coulter, Inc.).

<Production of BPI composition>

[Example 1] Production of BPI composition BPa-1

The inside of a four-necked flask equipped with a stirrer, a thermometer, and a cooling tube was replaced with nitrogen, 150.0 g of the polyisocyanate Pa-1 obtained in Synthesis Example 1, 80.2 g of PG1, 15 g of POL1, 3 g of PPL1 and 0.01 g of JP-508T were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 517.5 g of water and 1 g of ROCIMA 553 were added thereto, and the resulting mixture was further stirred for 30 minutes to obtain a BPI composition BPa-1. The obtained BPI composition had an effective NCO content of 3.2% by mass and was dispersible in water. The obtained BPI composition BPa-1 was added in the amount shown in Table 1 at a ratio such that the molar ratio of hydroxy groups of the polyol with respect to the isocyanate groups of the BPI composition was 1.0.

[Example 2] Production of BPI composition BPa-2

The inside of a four-necked flask equipped with a stirrer, a thermometer, and a cooling tube was replaced with nitrogen, 150.0 g of the polyisocyanate Pa-1 obtained in Synthesis Example 1, 80.2 g of PG1, 15 g of POL1, 3 g of PPL1 and 0.01 g of JP-508T were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 690 g of ion-exchanged water and 1 g of ROCIMA 553 were added thereto, and the resulting mixture was further stirred for 30 minutes to obtain a BPI composition BPa-2. The obtained BPI composition had an effective NCO content of 2.4% by mass and was dispersible in water. The obtained BPI composition BPa-2 was added in the amount shown in Table 1 in such a proportion that the molar ratio of hydroxy groups of the polyol with respect to the isocyanate groups of the BPI composition was 1.0.

[Example 3] Production of BPI composition BPa-3

The inside of a four-necked flask equipped with a stirrer, a thermometer, and a cooling tube was replaced with nitrogen, 154.0 g of the polyisocyanate Pa-2 obtained in Synthesis Example 2, 75.9 g of PG1, 15 g of POL1, 3 g of PPL1 and 0.01 g of JP-508T were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 690 g of ion-exchanged water and 1 g of ROCIMA 553 were added thereto, and the resulting mixture was further stirred for 30 minutes to obtain a BPI composition BPa-3. The obtained BPI composition had an effective NCO content of 2.4% by mass and was dispersible in water. The obtained BPI composition BPa-3 was added in the amount shown in Table 1 in such a proportion that the molar ratio of hydroxy groups of the polyol with respect to the isocyanate groups of the BPI composition was 1.0.

[Example 4] Production of BPI composition BPa-4

The inside of a four-necked flask equipped with a stirrer, a thermometer, and a cooling tube was replaced with nitrogen, 145.0 g of the polyisocyanate Pa-3 obtained in Synthesis Example 3, 85.1 g of PG1, 15 g of POL1, 3 g of PPL1 and 0.01 g of JP-508T were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 690 g of ion-exchanged water and 1 g of ROCIMA 553 were added thereto, and the resulting mixture was further stirred for 30 minutes to obtain a BPI composition BPa-4. The obtained BPI composition had an effective NCO content of 2.3% by mass and was dispersible in water. The obtained BPI composition BPa-4 was added in the amount shown in Table 1 in such a proportion that the molar ratio of hydroxy groups of the polyol with respect to the isocyanate groups of the BPI composition was 1.0.

[Example 5] Production of BPI composition BPa-5

The inside of a four-necked flask equipped with a stirrer, a thermometer, and a cooling tube was replaced with nitrogen, 147.2 g of the polyisocyanate Pa-4 obtained in Synthesis Example 4, 82.8 g of PG1, 15 g of POL1, 3 g of PPL1 and 0.01 g of JP-508T were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 517.5 g of ion-exchanged water and 1 g of ROCIMA 553 were added thereto, and the resulting mixture was further stirred for 30 minutes to obtain a BPI composition BPa-5. The obtained BPI composition had an effective NCO content of 3.3% by mass and was dispersible in water. The obtained BPI composition BPa-5 was added in the amount shown in Table 1 in such a proportion that the molar ratio of hydroxy groups of the polyol with respect to the isocyanate groups of the BPI composition was 1.0.

[Example 6] Production of BPI composition BPa-6

The inside of a four-necked flask equipped with a stirrer, a thermometer, and a cooling tube was replaced with nitrogen, 147.2 g of the polyisocyanate Pa-5 obtained in Synthesis Example 5, 82.8 g of PG1, 15 g of POL1, 3 g of PPL1 and 0.01 g of JP-508T were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 517.5 g of ion-exchanged water and 1 g of ROCIMA 553 were added thereto, and the resulting mixture was further stirred for 30 minutes to obtain a BPI composition BPa-6. The obtained BPI composition had an effective NCO content of 3.3% by mass and was dispersible in water. The obtained BPI composition BPa-6 was added in the amount shown in Table 2 in such a proportion that the molar ratio of hydroxy groups of the polyol with respect to the isocyanate groups of the BPI composition was 1.0.

[Example 7] Production of BPI composition BPa-7

The inside of a four-necked flask equipped with a stirrer, a thermometer, and a cooling tube was replaced with nitrogen, 150.0 g of the polyisocyanate Pa-1 obtained in Synthesis Example 1, 80.2 g of PG1, 38.8 g of POL2, 0.01 g of JP-508T and 3 g of PPL1 were mixed therein, and a urethane-forming reaction was carried out at 120°C for 5 hours. The reaction solution was cooled to 80°C, 58.3 g of 3,5-dimethylpyrazole was added as a blocking agent, and the resulting mixture was stirred. After confirming that the characteristic absorption of isocyanate groups had disappeared using an infrared spectrum, 690 g of ion-exchanged water and 1 g of ROCIMA 553 were added thereto, and the resulting mixture was further stirred for 30 minutes to obtain a BPI composition BPa-7. The obtained BPI composition had an effective NCO content of 2.2% by mass and was dispersible in water. The obtained BPI composition BPa-7 was added in the amount shown in Table 2 in such a proportion that the molar ratio of hydroxy groups of the polyol with respect to the isocyanate groups of the BPI composition was 1.0.

[Example 8] Production of BPI composition BPa-8

The inside of a four-necked flask equipped with a stirrer, a thermometer, and a cooling tube was replaced with nitrogen, 150.0 g of the polyisocyanate Pa-1 obtained in Synthesis Example 1, 80.2 g of PG1, 62.0 g of POL3, 3 g of PPL1 and 0.01 g of JP-508T were mixed therein, and a urethane-forming reaction was carried out at 120°C for 5 hours. The reaction solution was cooled to 80°C, 59.8 g of 3,5-dimethylpyrazole was added as a blocking agent, and the resulting mixture was stirred. After confirming that the characteristic absorption of isocyanate groups had disappeared using an infrared spectrum, 690 g of water and 1 g of ROCIMA 553 were added thereto, and the resulting mixture was further stirred for 30 minutes to obtain a BPI composition BPa-8. The obtained BPI composition had an effective NCO content of 2.1% by mass and was dispersible in water. The obtained BPI composition BPa-8 was added in the amount shown in Table 2 in such a proportion that the molar ratio of hydroxy groups of the polyol with respect to the isocyanate groups of the BPI composition was 1.0.

[Example 9] Production of BPI composition BPa-9

The inside of a four-necked flask equipped with a stirrer, a thermometer, and a cooling tube was replaced with nitrogen, 150.0 g of the polyisocyanate Pa-1 obtained in Synthesis Example 1, 50.0 g of PG1, 15 g of POL1, 3 g of PPL1 and 0.01 g of JP-508T were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 690 g of water and 1 g of ROCIMA 553 were added thereto, and the resulting mixture was further stirred for 30 minutes to obtain a BPI composition BPa-9. The obtained BPI composition had an effective NCO content of 2.8% by mass and was dispersible in water. The obtained BPI composition BPa-9 was added in the amount shown in Table 2 in such a proportion that the molar ratio of hydroxy groups of the polyol with respect to the isocyanate groups of the BPI composition was 1.0.

[Example 10] Production of BPI composition BPa-10

The inside of a four-necked flask equipped with a stirrer, a thermometer, and a cooling tube was replaced with nitrogen, 150.0 g of the polyisocyanate Pa-1 obtained in Synthesis Example 1, 80.2 g of PG2, 15 g of POL1, 3 g of PPL1 and 0.01 g of JP-508T were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 690 g of water and 1 g of ROCIMA 553 were added thereto, and the resulting mixture was further stirred for 30 minutes to obtain a BPI composition BPa-10. The obtained BPI composition had an effective NCO content of 2.2% by mass and was dispersible in water. The obtained BPI composition BPa-10 was added in the amount shown in Table 2 in such a proportion that the molar ratio of hydroxy groups of the polyol with respect to the isocyanate groups of the BPI composition was 1.0.

[Example 11] Production of BPI composition BPa-11

The inside of a four-necked flask equipped with a stirrer, a thermometer, and a cooling tube was replaced with nitrogen, 150.0 g of the polyisocyanate Pa-1 obtained in Synthesis Example 1, 80.2 g of PG1, 15 g of POL1, 3 g of PPL2 and 0.01 g of JP-508T were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 690 g of ion-exchanged water and 1 g of ROCIMA 553 were added thereto, and the resulting mixture was further stirred for 30 minutes to obtain a BPI composition BPa-11. The obtained BPI composition had an effective NCO content of 2.4% by mass and was dispersible in water. The obtained BPI composition BPa-11 was added in the amount shown in Table 3 at a ratio such that the molar ratio of hydroxy groups of the polyol with respect to the isocyanate groups of the BPI composition was 1.0.

[Example 12] Production of BPI composition BPa-12

The inside of a four-necked flask equipped with a stirrer, a thermometer, and a cooling tube was replaced with nitrogen, 150.0 g of the polyisocyanate Pa-1 obtained in Synthesis Example 1, 80.2 g of PG1, 15 g of POL1, 3 g of PPL1 and 0.01 g of JP-508T were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 550 g of ion-exchanged water and 1 g of ROCIMA 553 were added thereto, and the resulting mixture was further stirred for 30 minutes to obtain a BPI composition BPa-12. The obtained BPI composition had an effective NCO content of 2.8% by mass and was dispersible in water. The obtained BPI composition BPa-1 was added in the amount shown in Table 1 at a ratio such that the molar ratio of hydroxy groups of the polyol with respect to the isocyanate groups of the BPI composition was 1.0. The obtained BPI composition BPa-12 was added in the amount shown in Table 3 at a ratio such that the molar ratio of hydroxy groups of the polyol with respect to the isocyanate groups of the BPI composition was 1.0.

[Example 13] to [Example 17]

The BPI composition BPa-2 was produced using the same method as in Example 2, with the exception that materials were added at ratios so as to achieve compositions shown in Table 3. The obtained BPI composition was added in the amount shown in Table 3 at a ratio such that the molar ratio of hydroxy groups of the polyol with respect to the isocyanate groups of the BPI composition was 1.0.

[Comparative Example 1] Production of BPI composition BPb-1

The inside of a four-necked flask equipped with a stirrer, a thermometer, and a cooling tube was replaced with nitrogen, 150.0 g of the polyisocyanate Pa-1 obtained in Synthesis Example 1, 80.2 g of PG1, 77.1 g of PCL, 0.01 g of JP-508T and 3 g of PPL1 were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 690 g of ion-exchanged water and 1 g of ROCIMA 553 were added thereto, and the resulting mixture was further stirred for 30 minutes to obtain a BPI composition BPb-1. The obtained BPI composition had an effective NCO content of 2.0% by mass and was dispersible in water. The obtained BPI composition BPb-1 was added in the amount shown in Table 4 at a ratio such that the molar ratio of hydroxy groups of the polyol with respect to the isocyanate groups of the BPI composition was 1.0.

[Comparative Example 2] Production of BPI composition BPb-2

The inside of a four-necked flask equipped with a stirrer, a thermometer, and a cooling tube was replaced with nitrogen, 150.0 g of the polyisocyanate Pa-1 obtained in Synthesis Example 1, 80.2 g of PG1, 100.8 g of POL2 and 0.01 g of JP-508T were mixed therein, and a urethane-forming reaction was carried out at 120°C for 5 hours. The reaction solution was cooled to 80°C, 54.6 g of 3,5-dimethylpyrazole was added as a blocking agent, and the resulting mixture was stirred. After confirming that the characteristic absorption of isocyanate groups had disappeared using an infrared spectrum, 690 g of ion-exchanged water and 1 g of ROCIMA 553 were added thereto, and the resulting mixture was further stirred for 30 minutes to obtain a BPI composition BPb-2. The obtained BPI composition had an effective NCO content of 1.5% by mass and was dispersible in water. The obtained BPI composition BPb-2 was added in the amount shown in Table 4 at a ratio such that the molar ratio of hydroxy groups of the polyol with respect to the isocyanate groups of the BPI composition was 1.0.

[Comparative Example 3] Production of BPI composition BPb-3

The inside of a four-necked flask equipped with a stirrer, a thermometer, and a cooling tube was replaced with nitrogen, 150.0 g of the polyisocyanate Pa-1 obtained in Synthesis Example 1, 162.2 g of PG1, 15 g of POL1, 3 g of PPL1 and 0.01 g of JP-508T were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 690 g of ion-exchanged water and 1 g of ROCIMA 553 were added thereto, and the resulting mixture was further stirred for 30 minutes to obtain a BPI composition BPb-3. The obtained BPI composition had an effective NCO content of 1.5% by mass and was dispersible in water. The obtained BPI composition BPb-3 was added in the amount shown in Table 4 at a ratio such that the molar ratio of hydroxy groups of the polyol with respect to the isocyanate groups of the BPI composition was 1.0.

[Comparative Example 4] Production of BPI composition BPb-4

The inside of a four-necked flask equipped with a stirrer, a thermometer, and a cooling tube was replaced with nitrogen, 150.0 g of the polyisocyanate Pa-1 obtained in Synthesis Example 1, 15 g of POL1, 3 g of PPL1 and 0.01 g of JP-508T were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 690 g of ion-exchanged water and 1 g of ROCIMA 553 were added thereto, and the resulting mixture was further stirred for 30 minutes to obtain a BPI composition BPb-4. The obtained BPI composition had an effective NCO content of 3.7% by mass and was not dispersible in water. The obtained BPI composition BPb-4 was added in the amount shown in Table 4 at a ratio such that the molar ratio of hydroxy groups of the polyol with respect to the isocyanate groups of the BPI composition was 1.0.

[Comparative Example 5] Production of BPI composition BPb-5

The inside of a four-necked flask equipped with a stirrer, a thermometer, and a cooling tube was replaced with nitrogen, 150.0 g of the polyisocyanate Pa-1 obtained in Synthesis Example 1, 80.2 g of PG1, 100.8 g of POL2, 3 g of PPL1 and 0.01 g of JP-508T were mixed therein, and a urethane-forming reaction was carried out at 120°C for 5 hours. The reaction solution was cooled to 80°C, 54.6 g of 3,5-dimethylpyrazole was added as a blocking agent, and the resulting mixture was stirred. After confirming that the characteristic absorption of isocyanate groups had disappeared using an infrared spectrum, 690 g of ion-exchanged water and 1 g of ROCIMA 553 were added thereto, and the resulting mixture was further stirred for 30 minutes to obtain a BPI composition BPb-5. The obtained BPI composition had an effective NCO content of 1.5% by mass and was dispersible in water. The obtained BPI composition BPb-5 was added in the amount shown in Table 4 at a ratio such that the molar ratio of hydroxy groups of the polyol with respect to the isocyanate groups of the BPI composition was 1.0.

[Comparative Example 6] Production of BPI composition BPb-6

The inside of a four-necked flask equipped with a stirrer, a thermometer, and a cooling tube was replaced with nitrogen, 150.0 g of the polyisocyanate Pa-1 obtained in Synthesis Example 1, 80.2 g of PG1, 0.01 g of JP-508T and 3 g of PPL1 were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 690 g of ion-exchanged water and 1 g of ROCIMA 553 were added thereto, and the resulting mixture was further stirred for 30 minutes to obtain a BPI composition BPb-6. The obtained BPI composition had an effective NCO content of 2.8% by mass and was dispersible in water. The obtained BPI composition BPb-6 was added in the amount shown in Table 5 at a ratio such that the molar ratio of hydroxy groups of the polyol with respect to the isocyanate groups of the BPI composition was 1.0.

[Comparative Example 7] Production of BPI composition BPb-7

The inside of a four-necked flask equipped with a stirrer, a thermometer, and a cooling tube was replaced with nitrogen, 150.0 g of the polyisocyanate Pa-1 obtained in Synthesis Example 1, 80.2 g of PG1, 77.2 g of PCD, 3 g of PPL1 and 0.01 g of JP-508T were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 690 g of ion-exchanged water and 1 g of ROCIMA 553 were added thereto, and the resulting mixture was further stirred for 30 minutes to obtain a BPI composition BPb-7. The obtained BPI composition had an effective NCO content of 2.0% by mass and was dispersible in water. The obtained BPI composition BPb-7 was added in the amount shown in Table 5 at a ratio such that the molar ratio of hydroxy groups of the polyol with respect to the isocyanate groups of the BPI composition was 1.0.

[Comparative Example 8] Production of BPI composition BPb-8

The inside of a four-necked flask equipped with a stirrer, a thermometer, and a cooling tube was replaced with nitrogen, 150.0 g of the polyisocyanate Pa-1 obtained in Synthesis Example 1, 80.2 g of PG1, 15 g of POL1 and 0.01 g of JP-508T were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 690 g of ion-exchanged water was added thereto, and the resulting mixture was further stirred for 30 minutes to obtain a BPI composition BPb-8. The obtained BPI composition had an effective NCO content of 2.4% by mass and was dispersible in water. The obtained BPI composition BPb-8 was added in the amount shown in Table 5 at a ratio such that the molar ratio of hydroxy groups of the polyol with respect to the isocyanate groups of the BPI composition was 1.0.

[Comparative Example 9] Production of BPI composition BPb-9

The inside of a four-necked flask equipped with a stirrer, a thermometer, and a cooling tube was replaced with nitrogen, 150.0 g of the polyisocyanate Pa-1 obtained in Synthesis Example 1, 80.2 g of PG1, 15 g of POL1 and 0.01 g of JP-508T were mixed therein, and a urethane-forming reaction was carried out at 120°C for 5 hours. The reaction solution was cooled to 80°C, 57.6 g of 3,5-dimethylpyrazole was added as a blocking agent, and the resulting mixture was stirred. After confirming that the characteristic absorption of isocyanate groups had disappeared using an infrared spectrum, 136 g of ion-exchanged water and 1 g of ROCIMA 553 were added thereto, and the resulting mixture was further stirred for 30 minutes to obtain a BPI composition BPb-9. The obtained BPI composition had an effective NCO content of 4.8% by mass and was not dispersible in water. The obtained BPI composition BPb-9 was added in the amount shown in Table 5 at a ratio such that the molar ratio of hydroxy groups of the polyol with respect to the isocyanate groups of the BPI composition was 1.0.

[Comparative Example 10] Production of BPI composition BPb-10

The inside of a four-necked flask equipped with a stirrer, a thermometer, and a cooling tube was replaced with nitrogen, 150.0 g of the polyisocyanate Pa-1 obtained in Synthesis Example 1, 100.0 g of PG1, 15 g of POL1, 3 g of PPL1 and 0.01 g of JP-508T were mixed therein, and a urethane-forming reaction was carried out at 120°C for 5 hours. The reaction solution was cooled to 80°C, 35.5 g of methyl ethyl ketoxime was added as a blocking agent, and the resulting mixture was stirred. After confirming that the characteristic absorption of isocyanate groups had disappeared using an infrared spectrum, 690 g of ion-exchanged water and 1 g of ROCIMA 553 were added thereto, and the resulting mixture was further stirred for 30 minutes to obtain a BPI composition BPb-10. The obtained BPI composition had an effective NCO content of 2.2% by mass and was dispersible in water, but was slightly turbid. The obtained BPI composition BPb-10 was added in the amount shown in Table 5 at a ratio such that the molar ratio of hydroxy groups of the polyol with respect to the isocyanate groups of the BPI composition was 1.0.

[Comparative Example 11]

The BPI composition BPa-2 was produced using the same method as in Example 2, with the exception that materials were added at ratios so as to achieve compositions shown in Table 5. The obtained BPI composition was added in the amount shown in Table 5 at a ratio such that the molar ratio of hydroxy groups of the polyol with respect to the isocyanate groups of the BPI composition was 1.0.

Using the BPI compositions obtained in Examples and Comparative Examples, various physical properties were measured and evaluated in accordance with the methods described above. The results are shown in Tables 1 to 5 below.

[Table 1]

| | | Ex. 1 | Ex. 2 | Ex. 3 | Ex. 4 | Ex. 5 |
|---|---|---|---|---|---|---|
| Composition | Blocked polyisocyanate composition | BPa-1 | BPa-2 | BPa-3 | BPa-4 | BPa-5 |
| | Component (A) | Pa-1 | Pa-1 | Pa-2 | Pa-3 | Pa-4 |
| | Component (B) | PG1 | PG1 | PG1 | PG1 | PG1 |
| | Component (C) | POL1 | POL1 | POL1 | POL1 | POL1 |
| | Component (C') | - | - | - | - | - |
| | Component (D) | PPL1 | PPL1 | PPL1 | PPL1 | PPL1 |
| | Number average molecular weight of (C) or (C') | 400 | 400 | 400 | 400 | 400 |
| | Number average molecular weight of (D) | 800 | 800 | 800 | 800 | 800 |
| | Component (E) | 3,5-dimethylpyrazole | 3,5-dimethylpyrazole | 3,5-dimethylpyrazole | 3,5-dimethylpyrazole | 3,5-dimethylpyrazole |
| | Component (E') | - | - | - | - | - |
| | Component (F) | ROCIMA 553 | ROCIMA 553 | ROCIMA 553 | ROCIMA 553 | ROCIMA 553 |
| | Polyol | Aqueous acrylic resin dispersion | Aqueous acrylic resin dispersion | Aqueous acrylic resin dispersion | Aqueous acrylic resin dispersion | Aqueous acrylic resin dispersion |
| | Other additive (% by mass) | - | - | - | - | - |
| | NCO/OH | 1.0 | 1.0 | 1.0 | 1.0 | 1.0 |
| Physical properties | Effective NCO content (% by mass) | 3.2 | 2.4 | 2.4 | 2.3 | 3.3 |
| | (A)/(B) | 65/35 | 65/35 | 67133 | 63/37 | 64/36 |
| | Content of structural unit derived from component (C) or (C') (% by mass) | 2 | 1.5 | 1.5 | 1.5 | 1.5 |
| | Content of structural unit derived from component (D) (% by mass) | 0.3 | 0.3 | 0.3 | 0.3 | 0.3 |
| | Water content (% by mass) | 60 | 70 | 70 | 70 | 60 |

(continued)

| Evaluation | | Ex. 1 | Ex. 2 | Ex. 3 | Ex. 4 | Ex. 5 |
|---|---|---|---|---|---|---|
| | Water dispersibility | B | B | B | B | B |
| | Compatibility with main agent | A | A | B | B | A |
| | Curability of coating film | B | B | B | B | B |
| Evaluation | Water resistance of coating film | B | B | B | B | B |
| | Adhesion | A | A | A | A | A |
| | Storage stability | B | A | A | A | B |

[Table 2]

| Composition | | Ex. 6 | Ex. 7 | Ex. 8 | Ex. 9 | Ex. 10 |
|---|---|---|---|---|---|---|
| | Blocked polyisocyanate composition | BPa-6 | BPa-7 | BPa-8 | BPa-9 | BPa-10 |
| | Component (A) | Pa-5 | Pa-1 | Pa-1 | Pa-1 | Pa-1 |
| | Component (B) | PG1 | PG1 | PG1 | PG1 | PG2 |
| | Component (C) | POL1 | POL2 | POL3 | POL1 | POL1 |
| | Component (C') | - | - | - | - | - |
| | Component (D) | PPL1 | PPL1 | PPL1 | PPL1 | PPL1 |
| | Number average molecular weight of (C) or (C') | 400 | 1,000 | 2,000 | 400 | 400 |
| | Number average molecular weight of (D) | 800 | 800 | 800 | 800 | 800 |
| | Component (E) | 3,5-dimethylpyrazole | 3,5-dimethylpyrazole | 3,5-dimethylpyrazole | 3,5-dimethylpyrazole | 3,5-dimethylpyrazole |
| | Component (E') | - | - | - | - | - |
| | Component (F) | ROCIMA 553 | ROCIMA 553 | ROCIMA 553 | ROCIMA 553 | ROCIMA 553 |
| | Polyol | Aqueous acrylic resin dispersion | Aqueous acrylic resin dispersion | Aqueous acrylic resin dispersion | Aqueous acrylic resin dispersion | Aqueous acrylic resin dispersion |
| | Other additive (% by mass) | - | - | - | - | - |
| | NCO/OH | 1.0 | 1.0 | 1.0 | 1.0 | 1.0 |

EP 4 403 586 A1

(continued)

| | | Ex. 6 | Ex. 7 | Ex. 8 | Ex. 9 | Ex. 10 |
|---|---|---|---|---|---|---|
| Physical properties | Effective NCO content (% by mass) | 3.3 | 2.2 | 2.1 | 2.8 | 2.2 |
| | (A)/(B) | 64/36 | 65/35 | 65/35 | 75/25 | 65/35 |
| | Content of structural unit derived from component (C) or (C') (% by mass) | 1.5 | 3.8 | 6.1 | 1.5 | 1.5 |
| | Content of structural unit derived from component (D) (% by mass) | 0.3 | 0.3 | 0.3 | 0.3 | 0.3 |
| | Water content (% by mass) | 60 | 70 | 70 | 70 | 70 |
| Evaluation | Water dispersibility | A | B | B | B | A |
| | Compatibility with main agent | A | A | A | B | B |
| | Curability of coating film | B | B | B | B | B |
| | Water resistance of coating film | B | B | B | A | A |
| | Adhesion | A | A | B | A | B |
| | Storage stability | A | B | B | B | B |

[Table 3]

| | | Ex 11 | Ex. 12 | Ex. 13 | Ex. 14 | Ex. 15 | Ex. 16 | Ex. 17 |
|---|---|---|---|---|---|---|---|---|
| Composition | Blocked polyisocyanate composition | BPa-11 | BPa-12 | BPa-2 | BPa-2 | BPa-2 | Bpa-2 | BPa-2 |
| | Component (A) | Pa-1 | Pa-1 | Pa-1 | Pa-1 | Pa-1 | Pa-1 | Pa-1 |
| | Component (B) | PG1 | PG1 | PG1 | PG1 | PG1 | PG1 | PG1 |
| | Component (C) | POL1 | POL1 | POL1 | POL1 | POL1 | POL1 | POL1 |
| | Component (C') | - | - | - | - | - | - | - |
| | Component (D) | PPL2 | PPL1 | PPL1 | PPL1 | PPL1 | PPL1 | PPL1 |
| | Number average molecular weight of (C) or (C') | 400 | 400 | 400 | 400 | 400 | 400 | 400 |
| | Number average molecular weight of (D) | 600 | 800 | 800 | 800 | 800 | 800 | 800 |
| | Component (E) | 3,5-dimethylpyrazole | 3,5-dimethylpyrazole | 3,5-dimethylpyrazole | 3,5-dimethylpyrazole | 3,5-dimethylpyrazole | 3,5-dimethylpyrazole | 3,5-dimethylpyrazole |
| | Component (E') | - | - | - | - | - | - | - |
| | Component (F) | ROCIMA 553 | ROCIMA 553 | ROCIMA 553 | ROCIMA 553 | ROCIMA 553 | ROCIMA 553 | ROCIMA 553 |
| | Polyol | Aqueous acrylic resin dispersion | Aqueous acrylic resin dispersion | Aqueous acrylic resin dispersion | Aqueous acrylic resin dispersion | Aqueous acrylic resin dispersion | Aqueous acrylic resin dispersion | Aqueous acrylic resin dispersion |
| | Other additive | - | - | LH-10 | LH-10 | XK-614 | - | - |
| | (% by mass) | | | 0.5% | 1.0% | 0.5% | | |
| | NCO/OH | 1.0 | 1.0 | 1.0 | 1.0 | 1.0 | 1.0 | 1.0 |

| | | Ex 11 | Ex. 12 | Ex. 13 | Ex. 14 | Ex. 15 | Ex. 16 | Ex. 17 |
|---|---|---|---|---|---|---|---|---|
| Physical properties | Effective NCO content (% by mass) | 2.4 | 2.8 | 2.4 | 2.4 | 2.4 | 2.4 | 2.3 |
| | (A)/(B) | 65/35 | 65/35 | 65/35 | 65/35 | 65/35 | 65/35 | 65/35 |
| | Content of structural unit derived from component (C) or (C') (% by mass) | 1.5 | 1.5 | 1.5 | 1.5 | 1.5 | 1.5 | 1.5 |
| | Content of structural unit derived from component (D) (% by mass) | 0.4 | 0.3 | 0.3 | 0.3 | 0.3 | 0.8 | 1.3 |
| | Water content (% by mass) | 70 | 65 | 70 | 70 | 70 | 70 | 70 |
| Evaluation | Water dispersibility | B | B | B | B | B | B | B |
| | Compatibility with main agent | A | A | A | A | A | A | B |
| | Curability of coating film | B | B | A | A | A | B | B |
| | Water resistance of coating film | B | B | B | B | B | B | C |
| | Adhesion | A | A | A | A | A | A | C |
| | Storage stability | B | A | A | A | A | A | B |

EP 4 403 586 A1

[Table 4]

| | | Comp. Ex. 1 | Comp. Ex. 2 | Comp. Ex. 3 | Comp. Ex. 4 | Comp. Ex. 5 |
|---|---|---|---|---|---|---|
| Composition | Blocked polyisocyanate composition | Bpb-1 | Bpb-2 | Bpb-3 | Bpb-4 | Bpb-5 |
| | Component (A) | Pa-1 | Pa-1 | Pa-1 | Pa-1 | Pa-1 |
| | Component (B) | PG1 | PG1 | PG1 | - | PG1 |
| | Component (C) | - | POL2 | POL1 | POL1 | POL2 |
| | Component (C') | PCL | - | - | - | - |
| | Component (D) | PPL1 | - | PPL1 | PPL1 | PPL1 |
| | Number average molecular weight of (C) or (C') | 2.000 | 1,000 | 400 | 400 | 1,000 |
| | Number average molecular weight of (D) | 800 | - | 800 | 800 | 800 |
| | Component (E) | 3,5-dimethylpyrazole | 3,5-dimethylpyrazole | 3,5-dimethylpyrazole | 3.5-dimethylpyrazole | 3,5-dimethylpyrazole |
| | Component (E') | - | - | - | - | - |
| | Component (F) | ROCIMA 553 | ROCIMA 553 | ROCIMA 553 | ROCIMA 553 | ROCIMA 553 |
| | Polyol | Aqueous acrylic resin dispersion | Aqueous acrylic resin dispersion | Aqueous acrylic resin dispersion | Aqueous acrylic resin dispersion | Aqueous acrylic resin dispersion |
| | Other additive (% by mass) | - | - | - | - | - |
| | NCO/OH | 1.0 | 1.0 | 1.0 | 1.0 | 1.0 |
| Physical properties | Effective NCO content (% by mass) | 2 | 1.5 | 1.5 | 3.7 | 1.5 |
| | (A)/(B) | 65/35 | 65/35 | 48/52 | - | 65/35 |
| | Content of structural unit derived from component (C) or (C') (% by mass) | 7.6 | 10.7 | 1.5 | 1.5 | 107 |
| | Content of structural unit derived from component (D) (% by mass) | 0.3 | - | 0.3 | 0.3 | 0.3 |
| | Water content (% by mass) | 70 | 70 | 70 | 70 | 70 |

| | | Comp. Ex. 1 | Comp. Ex. 2 | Comp. Ex. 3 | Comp. Ex. 4 | Comp. Ex. 5 |
|---|---|---|---|---|---|---|
| Evaluation | Water dispersibility | B | D | B | D | B |
| | Compatibility with main agent | B | D | B | D | B |
| | Curability of coating film | B | D | D | D | D |
| | Water resistance of coating film | B | D | D | D | D |
| | Adhesion | D | C | C | D | C |
| | Storage stability | C | D | D | C | D |

EP 4 403 586 A1

[Table 5]

| | | Comp. Ex. 6 | Comp. Ex. 7 | Comp. Ex. 8 | Comp. Ex. 9 | Comp. Ex. 10 | Comp. Ex. 11 |
|---|---|---|---|---|---|---|---|
| Composition | Blocked polyisocyanate composition | Bpb-6 | Bpb-7 | Bpb-8 | Bpb-9 | Bpb-10 | BPa-2 |
| | Component (A) | Pa-1 | Pa-1 | Pa-1 | Pa-1 | Pa-1 | Pa-1 |
| | Component (B) | PG1 | PG1 | PG1 | PG1 | PG1 | PG1 |
| | Component (C) | - | - | POL1 | POL1 | POL1 | POL1 |
| | Component (C') | - | PCD | - | - | - | - |
| | Component (D) | PPL1 | PPL1 3,5-dimethylpyrazole | - | - | PPL1 | PPL1 |
| | Number average molecular weight of (C) or (C') | - | 2,000 | 400 | 400 | 400 | 400 |
| | Number average molecular weight of (D) | 800 | 800 | - | - | 800 | 800 |
| | Component (E) | 3,5-dimethylpyrazole | 3,5-dimethylpyrazole | 3,5-dimethylpyrazole | 3,5-dimethylpyrazole | - | 3,5-dimethylpyrazole |
| | Component (E') | - | - | - | - | Methyl ethyl ketoxime | - |
| | Component (F) | ROCIMA 553 | ROCIMA 553 | - | ROCIMA 553 | ROCIMA 553 | ROCIMA 553 |
| | Polyol | Aquesous acrylic resin dispersion | Aquesous acrylic resin dispersion | Aquesous acrylic resin dispersion | Aquesous acrylic resin dispersion | Aquesous acrylic resin dispersion | Aquesous acrylic resin dispersion |
| | Other additive (% by mass) | | 3,5-dimethylpyrazole | - | - | - | - |
| | NCO/OH | 1.0 | 1.0 | 1.0 | 1.0 | 1.0 | 1.0 |

(continued)

| | | Comp. Ex. 6 | Comp. Ex. 7 | Comp. Ex. 8 | Comp. Ex. 9 | Comp. Ex. 10 | Comp. Ex. 11 |
|---|---|---|---|---|---|---|---|
| Physical properties | Effective NCO content (% by mass) | 2.8 | 2.0 | 2.4 | 4.8 | 2.2 | 23 |
| | (A)/(B) | 65/35 | 65/35 | 65/35 | 65/35 | 60/40 | 65/35 |
| | Content of structural unit derived from component (C) or (C') (% by mass) | 0 | 7.6 | 1.5 | 1.5 | 1.5 | 1.5 |
| | Content of structural unit derived from component (D) (% by mass) | 0.3 | 0.3 | - | - | 0.3 | 7 |
| | Water content (% by mass) | 70 | 70 | 70 | 40 | 70 | 70 |
| Evaluation | Water dispersibility | B | B | C | D | C | B |
| | Compatibility with main agent | C | D | C | C | C | B |
| | Curability of coating film | B | D | B | C | D | C |
| | Water resistance of coating film | C | D | B | B | B | D |
| | Adhesion | D | D | C | C | C | D |
| | Storage stability | D | C | D | D | C | B |

From Tables 1 to 3, it can be seen that the BPI compositions BPa-1 to BPa-11 (Examples 1 to 15) exhibited favorable dispersibility in water, excellent compatibility with the base agent, and significantly improved performance in terms of curability of the coating film, adhesion to the base material and water resistance over conventional performance.

In addition, the BPI compositions BPa-1 to BPa-8 and BPa-11 to BPa-15 in which the (A)/(B) ratio was from 63/37 to 70/30 (Examples 1 to 8 and Examples 11 to 15) exhibited particularly excellent adhesion to the base material.

On the other hand, as shown in Tables 4 and 5, in the BPI compositions BPb-5 and BPb-6 (Comparative Examples 5 and 6) in which a content of the structural unit derived from the component (C) was less than 0.1% or 10% by mass or more, the curability, water resistance, and storage stability of the coating film were significantly deteriorated.

In addition, the BPI composition BPb-1 (Comparative Example 1) in which the component (C) was changed to a polyester polyol exhibited poor adhesion to the coated base material and also tended to have poor storage stability and appearance. The BPI composition BPb-7 (Comparative Example 7) in which the component (C) was changed to a polycarbonate polyol exhibited poor curability, water resistance, and adhesion when formed into a coating film.

In addition, the BPI composition BPb-3 (Comparative Example 3) in which the (A)/(B) ratio was less than 60/40 exhibited poor curability and water resistance when formed into a coating film, and the BPI composition BPb-4 (Comparative Example 4) in which the (A)/(B) ratio was more than 90/10 did not exhibit water dispersibility or compatibility with the main agent.

Further, the BPI composition BPb-2 (Comparative Example 2), which did not use any component (D), exhibited poor compatibility with the main agent and tended to have poor dispersibility in water and storage stability. The BPI composition BPb-2 (Comparative Example 11) in which the content of the component (D) was 7.0% tended to have poor water resistance and adhesion to the base material.

INDUSTRIAL APPLICABILITY

The BPI composition of the present embodiment is used for, for example, curable compositions such as coating material compositions, pressure-sensitive adhesive compositions, adhesive compositions, and casting material compositions; various surface treatment agent compositions such as fiber treatment agents; various elastomer compositions; crosslinking agents such as foam compositions; modifiers; additives, and the like.

**Claims**

1. A blocked polyisocyanate composition comprising the following components (A), (B), (C), (D) and (E), and satisfying the following conditions (1) to (3):

      component (A): a polyisocyanate derived from an aliphatic diisocyanate;
      component (B): a nonionic hydrophilic compound containing an active hydrogen group;
      component (C): a difunctional or higher polyether polyol;
      component (D): a monool obtained by polymerizing an alkylene oxide having 3 or more carbon atoms; and
      component (E): a pyrazole-based compound,

          (1) a mass ratio of a structural unit derived from said component (A) with respect to a structural unit derived from said component (B) (((A)/(B)) ratio) is 60/40 or more and 90/10 or less;
          (2) a content of a structural unit derived from said component (C) is 0.1% by mass or more and 10% by mass or less with respect to a total mass of said blocked polyisocyanate composition; and
          (3) a content of said component (D) is 0.05% by mass or more and 6.5% by mass or less with respect to the total mass of said blocked polyisocyanate composition.

2. The blocked polyisocyanate composition according to Claim 1,
   wherein said component (B) comprises 5 or more and 20 or less alkylene oxide repeating units.

3. The blocked polyisocyanate composition according to Claim 1 or 2,
   wherein said component (C) has a number average molecular weight of 300 or more and 3,000 or less.

4. The blocked polyisocyanate composition according to Claim 1 or 2,
   wherein said component (D) has a number average molecular weight of 300 or more and 2,000 or less.

5. The blocked polyisocyanate composition according to Claim 1 or 2,
   wherein a content of said component (D) is less than 1% by mass with respect to the total mass of said blocked polyisocyanate composition.

6. An aqueous blocked polyisocyanate composition dispersion comprising the blocked polyisocyanate composition according to Claim 1 or 2 and ion-exchanged water,
   wherein a proportion of said ion-exchanged water with respect to said aqueous blocked polyisocyanate composition dispersion as a whole is 50% by mass or more and 90% by mass or less.

7. An aqueous coating material composition comprising the blocked polyisocyanate composition according to Claim 1 or 2.

8. A coating film obtained by curing the aqueous coating material composition according to Claim 7.

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2011 231264 A (ASAHI KASEI CHEMICALS CORP) 17 November 2011 (2011-11-17) * the whole document * | 1-8 | INV. C08G18/02 C08G18/08 C08G18/09 |
| A | EP 3 239 202 A1 (ASAHI CHEMICAL IND [JP]) 1 November 2017 (2017-11-01) * paragraphs [0001], [0005] - [0008] * * paragraph [0155]; examples 3,19,46; tables 1,4,10 * | 1-8 | C08G18/12 C08G18/16 C08G18/18 C08G18/22 C08G18/28 C08G18/48 C08G18/62 C08G18/79 C09D175/04 C09J175/04 |

| TECHNICAL FIELDS SEARCHED (IPC) |
|---|
| C08G C09D C09J |

The present search report has been drawn up for all claims

| Place of search | Date of completion of the search | Examiner |
|---|---|---|
| Munich | 28 May 2024 | Neugebauer, Ute |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 2416

This annex lists the patent family members relating to the patent documents cited in  the above-mentioned European search report.
The members are as contained in the European Patent Office EDP file on
The European Patent Office is in no way liable for these particulars which are merely given for the purpose of information.

28-05-2024

| Patent document cited in search report | | Publication date | Patent family member(s) | | Publication date |
|---|---|---|---|---|---|
| JP 2011231264 | A | 17-11-2011 | JP | 5570057 B2 | 13-08-2014 |
| | | | JP | 2011231264 A | 17-11-2011 |
| EP 3239202 | A1 | 01-11-2017 | CN | 107108830 A | 29-08-2017 |
| | | | EP | 3239202 A1 | 01-11-2017 |
| | | | JP | 6538720 B2 | 03-07-2019 |
| | | | JP | 6796155 B2 | 02-12-2020 |
| | | | JP | 2019094511 A | 20-06-2019 |
| | | | JP | WO2016104485 A1 | 17-08-2017 |
| | | | TW | 201631034 A | 01-09-2016 |
| | | | WO | 2016104485 A1 | 30-06-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023008075 A
- JP 2023087957 A
- JP 1088006 A
- JP 2016104485 A
- JP 5344875 B
- JP 2011231264 A

- JP 2020143231 A
- JP 508 T